# EUROPEAN PATENT APPLICATION

(11) **EP 4 475 601 A1**
(43) Date of publication of application: **11.12.2024**
(21) Application number: 23749935.5
(22) Date of filing: 30.01.2023
(51) Int. Cl.: H04W 48/20, H04W 60/04, H04W 4/40, H04W 88/04, H04W 84/04

(54) **MBSR MANAGEMENT METHOD**

(30) Priority: 04.02.2022 KR 20220014653; 05.12.2022 US 202263430067 P
(71) Applicant: LG Electronics Inc., Yeongdeungpo-gu Seoul 07336 (KR)
(72) Inventor: KIM, Laeyoung, Seoul 06772 (KR)
(74) Representative: Plasseraud IP
(86) International application number: PCT/KR2023/001334
(87) International publication number: WO 2023/149702

(57) **Abstract**

One disclosure of the present specification provides a method by which a UE communicates. The method comprises the steps of: receiving, from a mobile base station relay (MBSR), MBSR-specific information, which includes a MBSR selection determination timer; performing a first measurement on the MBSR; driving the MBSR selection determination timer on the basis that the result of the first measurement satisfies a cell reselection criteria; performing a second measurement on the MBSR on the basis that the MBSR selection determination timer has expired; and performing cell reselection on the MBSR on the basis that the result of the second measurement satisfies the cell reselection criteria.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In a study conducted in Release 18, Mobile Base Station Relay (MBSR) for Vehicle Mounted Relay (VMR) support in 5GS suffered from the problem that its mobility caused neighboring UEs to perform cell reselection and mobility registration updates too frequently.

### DESCLOSURE

### TECHNICAL SOLUTION

After detecting the MBSR, the UE performs cell reselection taking into account the characteristics of the MBSR.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 and FIG. 6 show an example of a 5G system architecture to which the implementation of the present specification is applied.
FIGS. 7 and 8 show an example of a registration procedure to which implementations of the present disclosure is applied.
FIG. 9 shows the scenario of a Mobile Base Station Relay (MBSR).
FIG. 10 shows IAB architecture.
FIG. 11 shows Scenarios for surrounding UEs.
FIGS. 12a and 12b show the Inter-gNB-DU Mobility for intra-NR procedure.
FIG. 13 shows the UE's MBSR selection-related procedures.
FIG. 14 shows the procedure of the UE according to disclosure of the present specification.
FIG. 15 shows the procedure of the MBSR according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

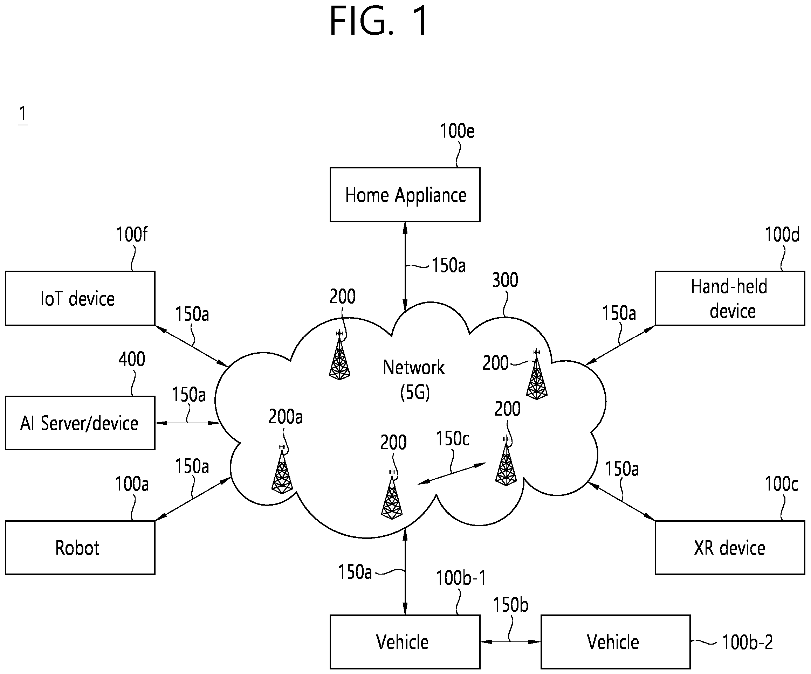

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

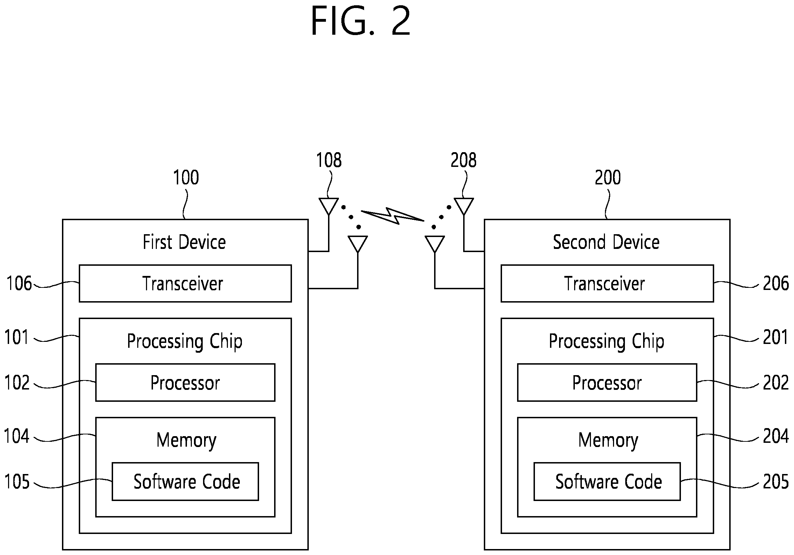

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

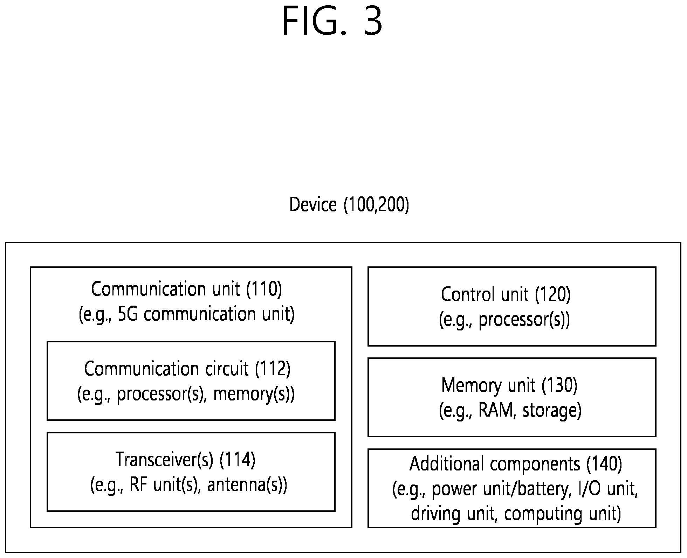

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

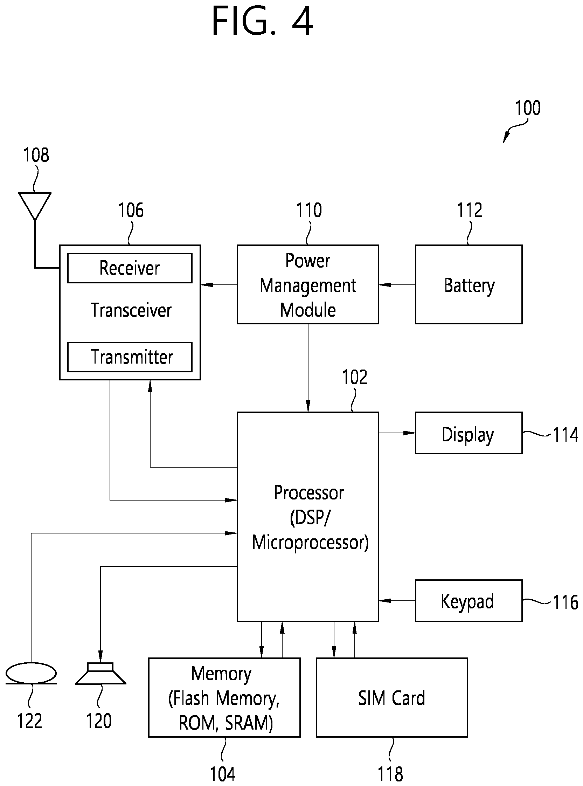

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

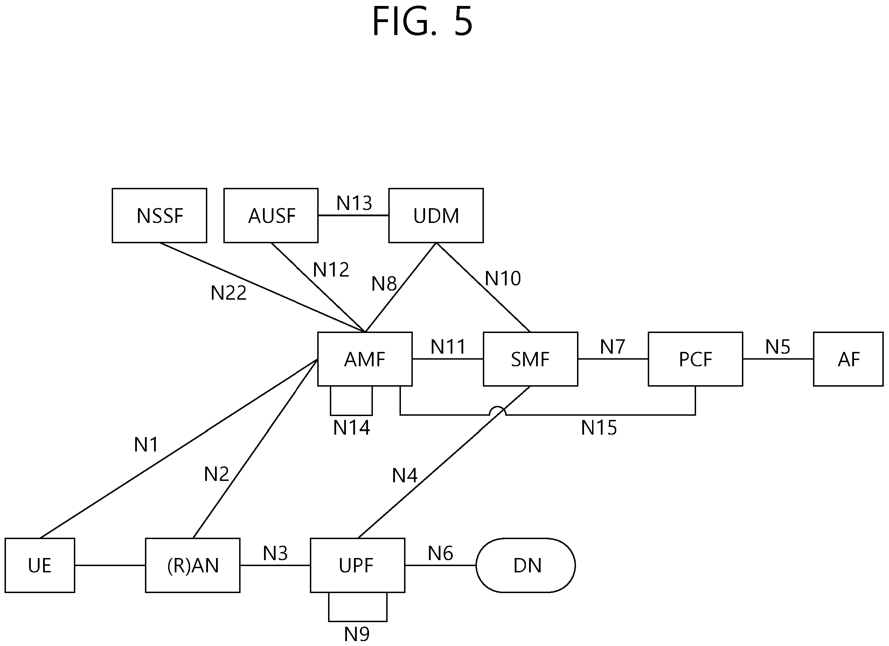

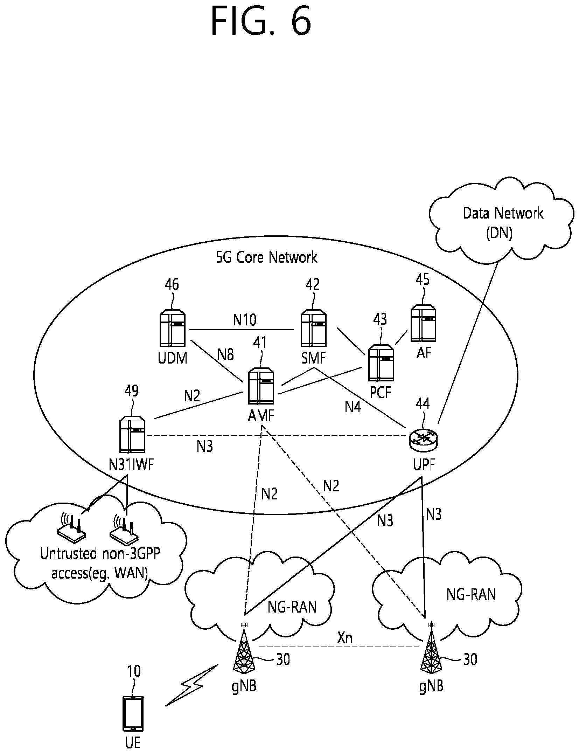

**FIG. 5** **and** **FIG. 6** **show an example of a 5G system architecture to which the implementation of the present specification is applied.**

The 5G system (SGS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 5 shows the 5G system structure of a non-roaming case using a reference point representation that shows how various network functions interact with each other.

In FIG. 5, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 5. For clarity, the connection between NWDAF and other NFs (e.g. PCFs) is not shown in FIG. 5.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

5GC (5G Core) may include various components, and in FIG. 6, AMF (Access and Mobility Management Function) 410, SMF (Session Management Function) 420, and PCF (Policy Control) corresponding to some of them Function) 430, UPF (User Plane Function) 440, AF (Application Function) 450, UDM (Unified Data Management) 460, and N3IWF (Non-3GPP InterWorking Function) 490.

The UE 100 is connected to a data network via the UPF 440 through a Next Generation Radio Access Network (NG-RAN) including the gNB 20.

The UE 100 may receive a data service through untrusted non-3rd Generation Partnership Project (non-3GPP) access, for example, a wireless local area network (WLAN). To connect the non-3GPP access to the core network, an N3IWF 490 may be deployed.

### < Registration procedure >

Describes the registration procedure. section 4.2.2.2 of 3GPP TS 23.502 V16.3.0 (2019-12) may be referred.

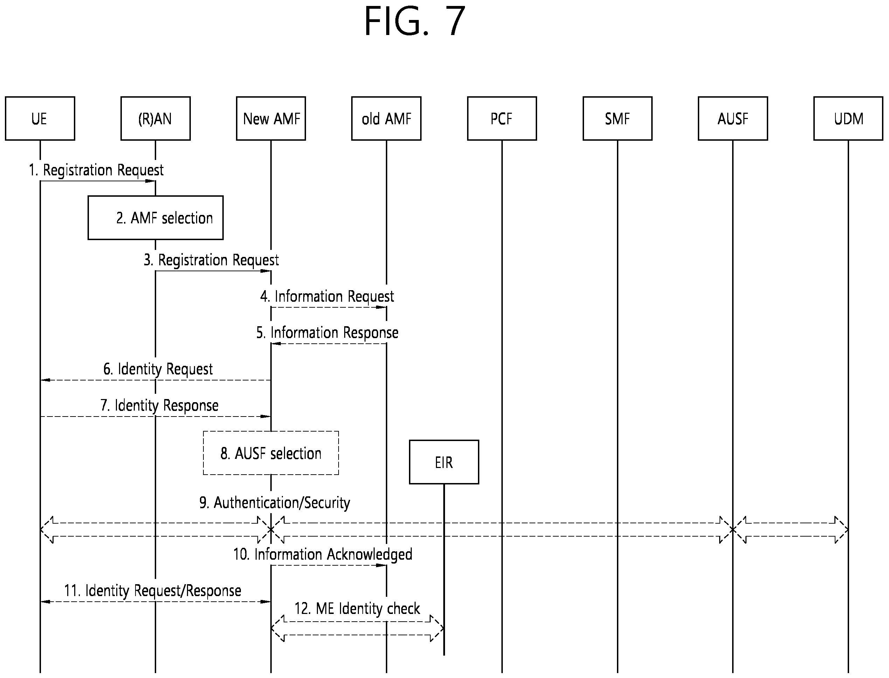

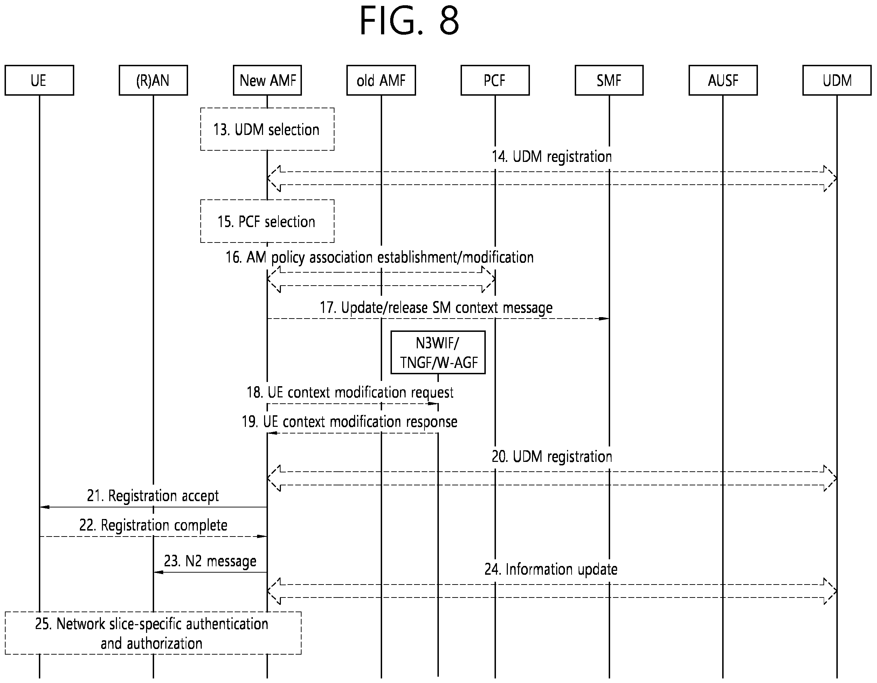

**FIGS. 7** **and** **8** **show an example of a registration procedure to which implementations of the present disclosure is applied.**

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 7 and 8 applies on all these registration procedures, but the periodic registration update need not include all parameters that are used in other registration cases.

The general registration procedure in FIGS. 7 and 8 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 7 are described.

(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication UEContextTransfer service operation on the old AMF including the complete registration request non-access stratum (NAS) message to request the UE's SUPI and UE context.

(5) Step 5: The Old AMF may respond to the new AMF for the Namf_Communication UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication RegistrationCompleteNotify service operation. If the authentication/security procedure fails, then the registration shall be rejected, and the new AMF may invoke the Namf_Communication RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the NSg-eir _EquipmentIdentityCheck_Get service operation.

Now, procedures of FIG. 8, which follow the procedures of FIG. 7, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_PDUSession_UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization(NSSAA; network slice-specific authentication and authorization) procedure.

### <Cell reselection>

If threshServingLowQ is broadcast in system information and more than 1 second has elapsed since the UE camped on the current serving cell, cell reselection to a cell on a higher priority NR frequency or inter-RAT frequency than the serving frequency shall be performed if:
- A cell of a higher priority NR or EUTRAN RAT/frequency fulfils Squal > Thresh_{X, HighQ} during a time interval Treselection_{RAT}.

Otherwise, cell reselection to a cell on a higher priority NR frequency or inter-RAT frequency than the serving frequency shall be performed if:
- A cell of a higher priority RAT/ frequency fulfils Srxlev > Thresh_{X, HighP} during a time interval Treselection_{RAT}; and
- More than 1 second has elapsed since the UE camped on the current serving cell.

Cell reselection to a cell on an equal priority NR frequency shall be based on ranking for intra-frequency cell reselection.

If threshServingLowQ is broadcast in system information and more than 1 second has elapsed since the UE camped on the current serving cell, cell reselection to a cell on a lower priority NR frequency or inter-RAT frequency than the serving frequency shall be performed if:
- The serving cell fulfils Squal < Thresh_{Serving, LowQ} and a cell of a lower priority NR or E-UTRAN RAT/ frequency fulfils Squal > Threshx, _{LowQ} during a time interval Treselection_{RAT}.

Otherwise, cell reselection to a cell on a lower priority NR frequency or inter-RAT frequency than the serving frequency shall be performed if:
- The serving cell fulfils Srxlev < Thresh_{Serving}, _{LowP} and a cell of a lower priority RAT/ frequency fulfils Srxlev > Threshx, _{LowP} during a time interval Treselection_{RAT}; and
- More than 1 second has elapsed since the UE camped on the current serving cell.

Cell reselection to a higher priority RAT/frequency shall take precedence over a lower priority RAT/frequency if multiple cells of different priorities fulfil the cell reselection criteria.

If more than one cell meets the above criteria, the UE shall reselect a cell as follows:
- If the highest-priority frequency is an NR frequency, the highest ranked cell among the cells on the highest priority frequency(ies) meeting the criteria;
- If the highest-priority frequency is from another RAT, the strongest cell among the cells on the highest priority frequency(ies) meeting the criteria of that RAT.

### < VMR (Vehicle Mounted Relay)>

The demand for improved 5G cellular coverage and connectivity continues to grow, which can be challenging in many outdoor and mobility scenarios.

In some outdoor environments, the availability of vehicles equipped with mobile base station relays can provide a very opportunistic boost to cellular coverage and capacity when or where it is needed.

From a high-level 5G system perspective, the target scenario includes a mobile vehicle equipped with a small on-board base station (BS) relay that provides 5G coverage and communication to UEs (in and/or around the vehicle).

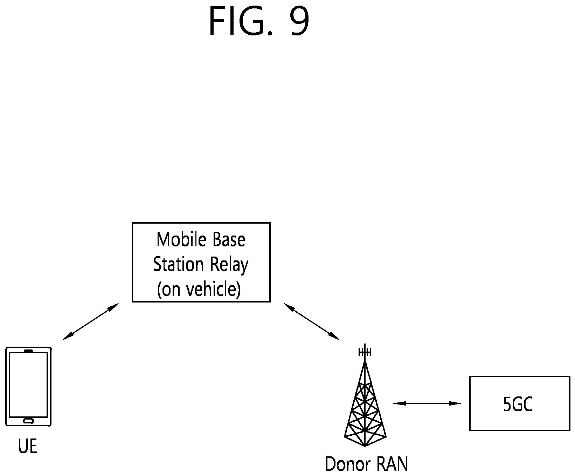

**FIG. 9** **shows the scenario of a Mobile Base Station Relay (MBSR).**

As shown in the FIG. 9, the main connectivity assumptions are:
- 5G NR is used for the radio link between mobile BS relay and donor RAN node, as well as the radio link between BS relay and UE.
- The mobile BS relay connects, via donor RAN node, to the 5G Core network (5GC).
- Single-hop relay is the main/baseline scenario (multi-hop can be a possible option)

The aim of this study work is to investigate and identify potential architecture and system level enhancements for 5G system to support the operation of base station relays possibly mounted on vehicles, using NR for wireless access toward the UE and for wireless self-backhauling toward 5GC. Specifically, the objectives include:
- efficient mobility and service continuity for UE or a group of UEs to efficiently deliver data during different mobility scenarios (including mobility of the mobile base station relays);
- provisioning, policies and mechanisms to e.g. manage relay configuration, geographic restrictions, QoS, authorize and control of UEs' access via the mobile base station relay, etc.;
- support for roaming of mobile base station relay (including the roaming of MT and DU components), support for regulatory requirements (e.g. emergency, priority services, public safety), and support for location services for UEs accessing mobile base station relay;

The study focuses on the IAB only. Any other alternative of base station relay depends on the RAN study output if any.

The study shall target support of legacy UE(s) but can consider optimizations involving UE changes.

Single-hop relay should be the main/baseline scenario.

This study shall focus on NR Uu for the UE connectivity to the mobile base station relay. However, optimization solutions by combining other functionalities, e.g. using PC5 for discover and mobility assistance/control among relays, etc., may also be considered.

The VMR we want to develop in Release 18 is based IAB (Integrated Access and Backhaul) by default.

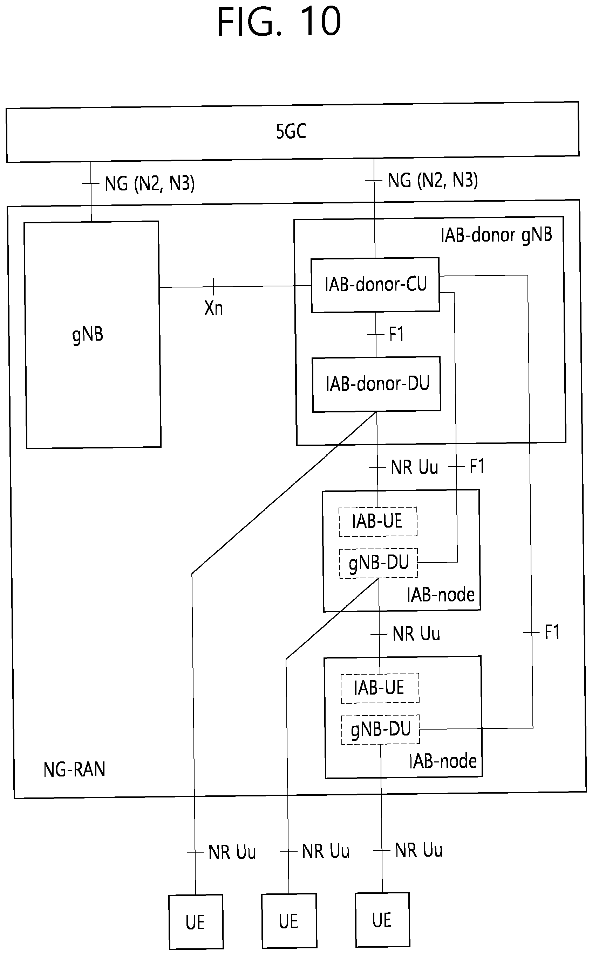

**FIG. 10** **shows IAB architecture.**

FIG. 10 shows the IAB reference architecture with two backhaul hops, when connected to 5GC.

The gNB-DU in the IAB-node is responsible for providing NR Uu access to UEs and child IAB-nodes. The corresponding gNB-CU function resides on the IAB-donor gNB, which controls IAB-node gNB-DU via the F1 interface. IAB-node appears as a normal gNB to UEs and other IAB-nodes and allows them to connect to the 5GC.

VMR may cause frequent Mobility Registration updates of surrounding UEs.

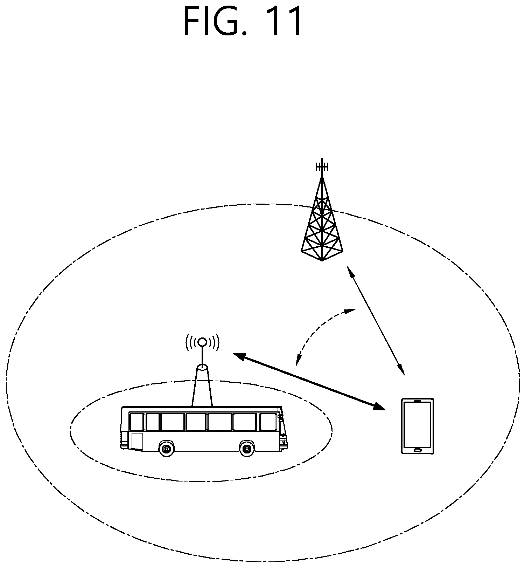

**FIG. 11** **shows Scenarios for surrounding UEs.**

When UE is normally connecting to macro base station and the vehicle is moving to an area in the vicinity of the UE, the surrounding UEs (i.e. outside the vehicle) may be affected by the moving cell served by the mobile base station relay, such as detecting a new cell activated by the macro station.

For example, the surrounding UE is assumed firstly registers with the network over macro base station and AMF allocates a Registration Area to the UE.

The potential impacts regarding the surrounding UEs are listed in the following:
1) The MBSR is assumed to be configured with a TAC by the OAM. When the mobile base station relay is moving to an area in the vicinity of the UE and the surrounding UE detects a new cell which is broadcasting a new TAC, then the UE detects it is changing to a new TA out of the RA and initiates Mobility Registration Update. The AMF allocates a new Registration Area which includes the new TAI where the UE is currently located.

After 1), the MBSR continues moving over a long distance. The surrounding UE cannot detect the cell information of mobile base station relay anymore and camps on the cell of macro base station which is broadcasting a different TAC. Then the UE have to initiate Mobility Registration Update again.

As can be seen from the above analysis, the open issues regarding whether cell information broadcasted by the mobile base station relay changes and whether UE performs legacy handover are very critical and the baseline for potential solutions in SA2. On the one hand, both the behaviors of UEs inside the vehicle and surrounding UEs may be affected by the mobile cell. On the other hand, the core network needs to manage the mobility for UEs accordingly, such as UE location update, Registration Area allocation, Paging.

To address the above challenges in 5G systems, there is a need for efficient use of vehicle mounted relays.

### <Disclosure of the present specification>

A proposed method for efficiently using a VMR (vehicle mounted relay) may comprise a combination of one or more of the following actions/configurations/steps.

User Equipment (UE) and terminal are used interchangeably in this specification.

VMR and MBSR (Mobile Base Station Relay) are used interchangeably herein.

In this specification, selecting an MBSR may be interpreted as i) selecting a cell of the MBSR, ii) selecting a PLMN of the MBSR, iii) selecting an NPN or SNPN of the MBSR, or iv) selecting a network of the MBSR.

In this specification, going to an MBSR may be interpreted as i) going to a cell of the MBSR, ii) going to a PLMN of the MBSR, iii) going to an NPN or SNPN of the MBSR, or iv) going to a network of the MBSR.

In this specification, the reason the UE considers to selects MBSR or to move to MBSR can be interpreted as because the UE can receive services from MBSR. This may take into account all of the following: whether access to the MBSR is permitted for the UE, and the time and/or location at which the MBSR operates.

### [1] UE-based solution: Decide whether to select MBSR based on timer

The MBSR may provide the UE with one or more of the following information:
1) information indicating that it is an MBSR
2) information indicating that it is a mobile base station
3) identifying information of the MBSR: this may or may not include the PLMN ID. The MBSR's identification information may be a newly defined ID to identify the MBSR, or it may be an existing CAG (Closed Access Group) ID.
4) Timer information related to the MBSR selection (i.e., timer information used when the UE decides whether to select MBSR): for example, a relatively short timer may set/provided for a fast-moving MBSR, while a relatively long timer may set/provided for a slow-moving MBSR. The timer value may be in sec or msec and may be a value greater than or equal to zero. When the selection (or reselection) condition for the MBSR is satisfied, said timer may be driven. If the selection condition is still satisfied after the timer ends, the terminal may select the MBSR.

The above information may be referred to as MBSR specific information. This MBSR specific information may be interpreted as the information provided by the MBSR in addition to the information provided by the base station to the UE (e.g. cellSelectionInfo, cellAccessRelatedInfo, etc.).

The MBSR may provide the MBSR specific information to the UE in one or more of the following ways:
a) Using SIB (System Information Block): For this purpose, the existing SIB may be expanded and used, or a new SIB may be defined and used.
b) Using MIB (Master Information Block): For this purpose, the existing MIB may be expanded and used, or a new MIB may be defined and used.
c) Using RRC message or dedicated signaling
d) MBSR announces discovery message through PC5 reference point
e) When the UE transmits a discovery message to MBSR through the PC5 reference point, MBSR transmits a response: The discovery message (e.g. solicit) is transmitted by the UE, which has detected the MBSR, to provide MBSR-specific information.
f) Using broadcast mode among the communication methods via the PC5 reference point.
g) using the unicast mode among the communication methods via the PC5 reference point.

The UE may not select the MBSR immediately when the UE detects the MBSR. If the MBSR (or a cell of this MBSR) still meets the criteria for selecting a base station/cell after a certain time (i.e. after the expiry of the timer(according to starting the timer) or after applying a timer), the UE may select the MBSR. After the UE selects the MBSR, the UE may perform registration procedures (e.g., mobility-based registration update) with the 5G CN through it.

The method of applying the MBSR selection decision-related timer may be additional application after applying the existing cell reselection timer. Or, only the MBSR selection decision-related timer may be applied without applying the existing cell reselection timer.

The existing cell reselection timer may be T-Reselection. T-Reselection may be related to the cell reselection timer Treselection_{RAT} for NR and E-UTRA. The value may be in seconds.

A scale factor value may be provided so that an existing cell reselection timer can be scaled and used instead of the MBSR selection decision-related timer (this may be referred to as an MBSR scale factor). A value obtained by multiplying the cell reselection timer by the scale factor value may be used for cell reselection. For example, the scale factor may be one of the following values: 0, 0.5, 1, 1.5, 2, 2.5, 3, etc. If the cell reselection timer value is 4 and the scale factor value is 2, the UE may use 8 seconds as the actual cell reselection timer value for MBSR selection. If the UE needs to apply a speed-based scale factor (one of 0.25, 0.5, 0.75, or 1) in a high-mobility state or a medium-mobility state(i.e., when a value obtained by multiplying the existing cell reselection timer value by the speed-based scale factor is used for actual cell reselection), the MBSR scale factor may be applied in addition to the speed-based scale factor application.

Additionally, the existing speed-based scale factor may be applied to MBSR selection decision-related timer information. That is, when the UE is in a high-mobility state or a medium-mobility state, the value of MBSR selection decision-related timer multiplied by the speed-based scale factor value may be used for MBSR reselection.

If the UE is in RRC_Connected state, the UE selecting MBSR may be interpreted as sending a measurement report containing information about MBSR to the base station that the UE is currently serving. In contrast, if the UE is in the RRC_Connected state, the UE not selecting MBSR may be interpreted as sending a measurement report that does not include information about MBSR to the base station that the UE is currently serving. This may apply throughout this specification.

i) the MBSR selection decision-related timer, ii) the application method of the MBSR selection decision-related timer (applied in addition to the existing cell reselection timer as described above, or applied without applying the existing cell reselection timer) and iii) MBSR scale factor information for the existing cell reselection timer may be provided by the MBSR to the terminal. Alternatively, i), ii), and iii) above may be set in the terminal. Alternatively, the NG-RAN that the terminal is currently serving may provide the above i), ii), and iii) to the terminal. Alternatively, if the UE is in the RRC_Idle state, the previously served NG-RAN may provide the above i), ii) and iii) to the UE. Alternatively, 5G CN may provide i), ii), and iii) above to the terminal.

If multiple timers exist, the UE may use the one provided by MBSR most preferentially.

The information below may be additionally used by the terminal to make a selection decision for the MBSR.
- Selection/use preference or priority information between a general base station (i.e., macro base station) and MBSR: This may be information about whether the use of a general base station is preferred/prioritized. Alternatively, it may be information about whether MBSR use is preferred/prioritized. Alternatively, it may be information about whether there is preference or priority between the two. It may be set differently per slice (or per NSSAI).

For example, if it is determined that MBSR selection/use is preferred, then even if the MBSR still meet the criteria for selecting a base station/cell after the timer value elapses from the time the MBSR satisfies the criteria for selecting a base station/cell, the UE may select the MBSR. As another example, if MBSR selection/use is determined to be preferred for a slice provided from MBSR and the UE wishes to use the slice, then even if the MBSR(cell of the MBSR) still meet the criteria for selecting a base station/cell after the timer value elapses from the time the MBSR satisfies the criteria for selecting a base station/cell, the UE may select the MBSR.

### [2] UE-based solution: Determine whether to select MBSR based on MBSR movement pattern information

MBSR may provide one or more of the following information to the UE.
1) Information indicating that it is an MBSR
2) Information indicating that it is a mobile base station
3) Identification of the MBSR: This may or may not include the PLMN ID. The MBSR's identification information may be a newly defined ID to identify the MBSR, or it may be in the form of an existing Closed Access Group (CAG) ID.
4) Movement pattern information (or mobility pattern information or movement characteristic information) of the MBSR: It may include information about the MBSR's movement speed, movement direction, movement path, and/or whether the movement path is always constant or not, etc. The movement speed may be an actual speed value, or it may be information about mobility (e.g., high mobility, medium mobility, low mobility).

The above information may be referred to as MBSR specific information. This MBSR specific information may be interpreted as information provided by the MBSR in addition to the information provided by the base station to the UE (e.g., cellSelectionInfo, cellAccessRelatedInfo, etc.).

The method of providing the above MBSR specific information to the UE can be described in ' [1] UE-based solution: timer based decision to select MBSR' above.

When the UE detects an MBSR, the UE may decide whether to select the MBSR based on one or more of the following information
a) MBSR specific information provided by the MBSR (in particular the movement pattern information of the MBSR)
b) the UE's own movement pattern information (or mobility pattern information or mobility characteristic information): It may include information on whether the UE is mobile or not, the speed of movement, the direction of movement, the path of movement, whether the path of movement is always constant or not, etc. The traveling speed may be an actual speed value, or it may be information about mobility (e.g., high mobility, medium mobility, low mobility).
c) Selection/use preference or prioritization information between a regular base station (i.e., macro base station) and an MBSR: The information may be about whether the use of a regular base station is preferred/prioritized. Or, it can be information about whether the use of MBSR is preferred/prioritized. Or, it could be information about whether there is no preference or prioritization between the two. It can also be set differently per slice (or per NSSAI).

For example, if it is determined that the UE has a similar movement pattern to the MBSR and that MBSR selection/use is preferred, the UE may decide to select MBSR. Conversely, even though MBSR selection/use is preferred, if the UE's movement pattern and the MBSR's movement pattern are determined to be different (e.g., they are moving in opposite directions, the UE is hardly moving while the MBSR is moving, etc.), the UE may determine not to select the MBSR. As another example, if i) the UE has a similar movement pattern to the MBSR, ii) the selection/use of the MBSR is determined to be preferred for the slice provided by the MBSR and iii) the UE wishes to use said slice, the UE may determine to select the MBSR.

The similarity of the movement patterns of the above-mentioned UE and MBSR means that one or more of the information listed in '4) MBSR's movement pattern information' is similar to one or more of the information listed in 'b) UE's own movement pattern information'(For example, when the direction of movement is similar). This may apply throughout this specification.

After the UE selects the above MBSR, the UE may perform the registration process with the 5G CN (e.g., registration update based on mobility) via the above MBSR.

### [3] UE-based solution: Mixed/combined application of [1] and [2] above.

The above [1] and [2] may be used in mixed/combined form. Thus, the MBSR specific information described in [1] and the MBSR specific information described in [2] may be provided to the UE together. The UE may then consider both and decide whether to select MBSR or not.

As an example of such a combination, even if the UE determines that the MBSR is selectable as described in [2], the UE may not select it immediately, but may select the MBSR after the application of a timer as described in [1]. Here, applying a timer may be interpreted as applying the final timer value calculated as a result of considering various timer-related information described in [1] (i.e., all timer-related information that the UE must consider for cell reselection. One or more of MBSR selection decision-related timer information, existing cell reselection timer, rate-based scale factor, and MBSR scale factor). The final timer value may be referred to as a timer value that must be considered for MBSR selection. This may apply throughout this specification.

As another example of a combination, when the UE determines cell reselection for MBSR after applying the timer, the UE may perform the cell reselection based on MBSR or the mobility of the UE.

### [4] AMF-based solution

1. The UE may detect MBSR and select it.
2. The UE may perform a registration procedure (e.g., registration update according to mobility) through MBSR. The UE may transmit a Registration Request message to the AMF.
3. AMF that has received the Registration Request message may decide whether to accept or reject registration through MBSR based on one or more of the following information:
   a) UE's movement pattern information (or mobility pattern information or movement characteristic information): this may include information on whether the UE is mobile, movement speed, movement direction, movement path, and whether the movement path is always constant or irregular. The moving speed may be an actual speed value or may be information about mobility (e.g., high mobility, medium mobility, low mobility).

The mobility pattern of the UE is a concept that can be used by the AMF to characterize and optimize the mobility of the UE. The AMF may determine and update the UE's mobility pattern based on the UE's subscription, statistics of UE mobility, network local policy and UE assistance information, or a combination thereof. Statistics of UE mobility may be past or expected UE movement trajectories. Once NWDAF is deployed, statistics of UE mobility may be analytics (i.e. statistics or predictions) provided by NWDAF.

AMF may use mobility patterns to optimize mobility support (e.g. registration area allocation) provided to the UE.

b) MBSR's movement pattern information (or mobility pattern information or movement characteristic information): this may include information on whether the MBSR is mobile, movement speed, movement direction, movement path, and whether the movement path is always constant or irregular. The moving speed may be an actual speed value or may be information about mobility (e.g., high mobility, medium mobility, low mobility). The mobility pattern information of MBSR may apply the mobility pattern of the UE described above.

The movement pattern information of the MBSR may be provided by the MBSR (e.g., provided when registering with the 5G CN as a UE, provided when the Registration Request message sent by the UE in step 2 is delivered to the AMF, etc.).

c) Selection/use preference or priority information between MBSR and a general base station (i.e., macro base station) for the UE: This may be information on whether the use of a general base station is preferred/prioritized for the UE. Alternatively, it may be information about whether MBSR use is preferred/prioritized. Alternatively, it may be information about whether there is preference or priority between the two. It may be set differently per slice (or per NSSAI).

This information may be provided by the UE to the AMF (e.g., included in the Registration Request message). Alternatively, this information may be obtained from the UE's subscriber information, etc.

d) Connection priority information between the general base station (i.e., macro base station) and MBSR set in AMF: this may include Information on whether connections through general base stations should be prioritized for UEs, information on whether connections through MBSR should be prioritized, and information on whether there is no connection priority between the two.

4. If the AMF decides to accept registration, it may send a registration accept message to the UE. On the other hand, if the AMF decides to reject registration, it may transmit a registration reject message to the UE. The registration reject message may include appropriate cause information indicating the reason for rejection. The cause may be to instruct the UE not to select the corresponding MBSR or to instruct the UE not to perform the registration procedure through the corresponding MBSR.

### [5] gNB-CU-based solution

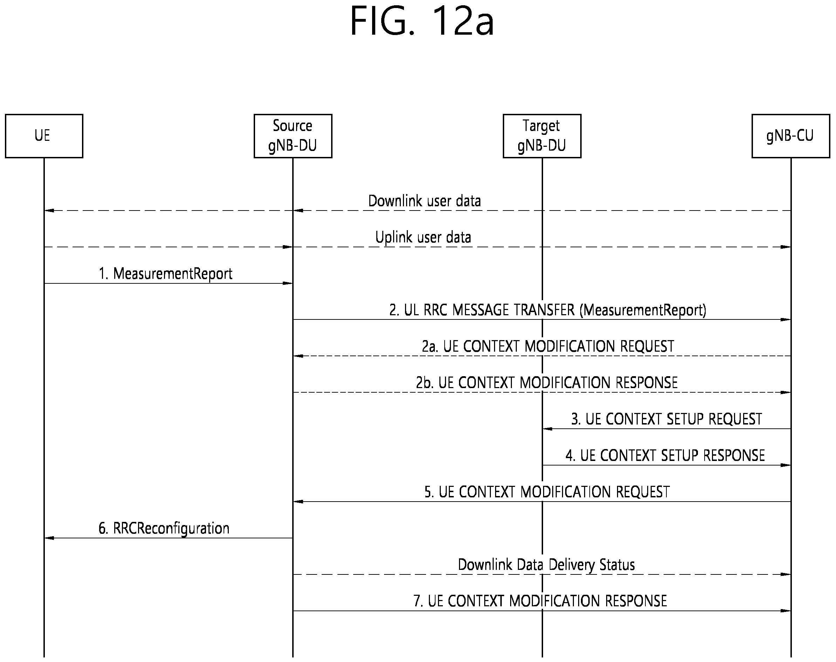

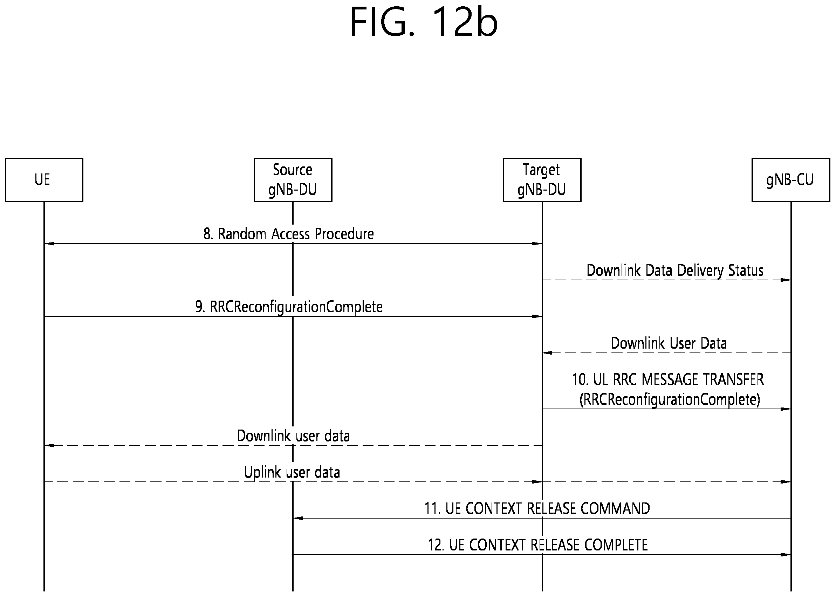

**FIGS. 12a** **and** **12b** **show the Inter-gNB-DU Mobility for intra-NR procedure.**

The procedure shown in FIGS. 12a and 12b may be applied when the UE moves between two gNB-DUs connected to the same gNB-CU. It is assumed that this procedure may be applied when the UE is connected to a regular base station (i.e., macro base station or macro gNB-DU) and then changes the connection to MBSR (i.e., mobile gNB-DU), or vice versa.

The source gNB-DU may be a general base station (i.e., a macro base station or macro gNB-DU). The target gNB-DU may be an MBSR (i.e., a mobile gNB-DU).
1. The UE may send a MeasurementReport to the source gNB-DU.
2. The source gNB-DU may send a UL RRC MESSAGE TRANSFER to the gNB-CU to carry the MeasurementReport.

The gNB-CU may decide whether to move the UE to the target gNB-DU based on one or more of the following information:
i) MBSR movement pattern information (or mobility pattern information or movement characteristic information): It may be the same as the above-described MBSR movement pattern information. gNB-CU may obtain this information by querying MBSR. Alternatively, it may be provided by AMF to gNB-CU. Alternatively, the gNB-CU may obtain some information from MBSR and receive some information from AMF.
ii) UE's movement pattern information (or mobility pattern information or movement characteristic information): It may be the same as the UE's movement pattern information described above. The gNB-CU may receive this information (provided by itself or obtained by the gNB-CU querying the UE) by the UE. Alternatively, the gNB-CU may be provided by AMF. Alternatively, the gNB-CU may obtain some information from the UE and receive some information from the AMF.
iii) Selection/use preference or priority information between MBSR and a general base station (i.e., macro base station) for the UE: This may be the same as c) in [4] above. The information (provided by itself or obtained by the gNB-CU querying the UE) may be received by the UE. Alternatively, the information may be provided by AMF. Alternatively, the gNB-CU may obtain some information from the UE and receive some information from the AMF.

For example, if it is determined that the UE and MBSR are moving in the same direction at similar speeds, the gNB-CU may determine that the UE selects MBSR. On the other hand, if it is determined that the UE and MBSR are moving in opposite directions, the gNB-CU may determine that the UE does not select MBSR.

If the gNB-CU determines that the UE selects MBSR, step 2 or later (i.e., from step 2a) may be performed. On the other hand, if the gNB-CU determines that the UE does not select MBSR, subsequent steps may not be performed.

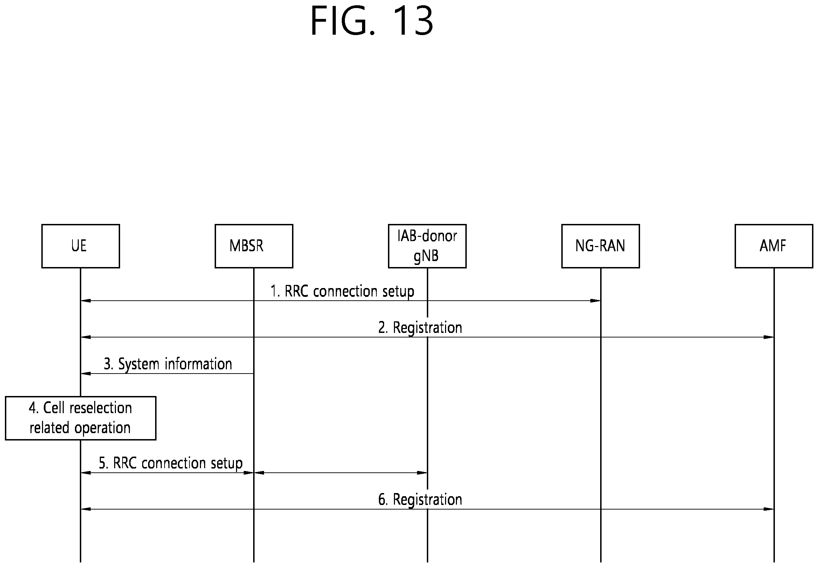

**FIG. 13** **shows the UE's MBSR selection-related procedures.**

In FIG. 13, the MBSR may be IAB-node or gNB-DU. In FIG. 13, the IAB-donor gNB may be IAB-donor-CU or gNB-CU.
1. The UE may setup an RRC connection by selecting a cell of a general base station (i.e., macro base station).
2. The UE may perform Registration procedures with AMF.
3. The UE may receive system information broadcast by MBSR. The system information may include the information described in [2] above. Additionally, the system information may optionally include the information described in [1] above.
4. The UE may perform an operation to determine whether to select MBSR (or a cell of MBSR). The operation may be interpreted as including an operation of checking whether the MBSR (or a cell of the MBSR) satisfies cell reselection criteria. The above operation may be interpreted as being performed as cell reselection criteria have already been satisfied.

Based on the information described in [1] and [2] above, the UE may decide whether to select MBSR (or a cell of MBSR). Specific operation examples are as follows:
1) If the MBSR does not provide the information described in [1] above but only the information described in [2] above, the UE may determine whether to select MBSR (or a cell of MBSR) as described in [2] above.
2) If the MBSR provides both the information described in [1] above (Even if the information is not proposed in this specification, it can be interpreted to include both cases where an existing cell reselection timer is provided and cases where an existing cell reselection timer and speed-based scale factor are provided) and the information described in [2] above, the UE may decide whether to select MBSR (or a cell of MBSR) as described in [3] above.
3) If the UE infers/determines that the cell targeted for cell reselection is an MBSR cell (or IAB cell), the UE may determine whether to select the MBSR cell by performing the following operations i)-iii):
   i) The UE may check whether its own movement pattern and the MBSR's movement pattern are similar or consistent.
   ii) The UE may check whether the MBSR has been selected. The confirmation may be confirmation of whether a selection has been made more than once. Alternatively, the confirmation may be a confirmation of whether a selection has been made more than a certain number of times. For the above confirmation, the UE may store/utilize hysteresis information on MBSR selection (e.g., information on MBSRs selected during a recent period).
   iii) If the MBSR and the movement pattern are similar or identical as a result of the check in i) above and/or if the MBSR has been selected as a result of the check in ii) above, the UE may decide to select the MBSR faster than the 'timer value to be considered for MBSR selection'. For example, the UE may scale-down/reduce the timer value that must be applied for MBSR selection. Alternatively, the UE may not use the MBSR scale factor provided by MBSR. Alternatively, when an MBSR selection decision-related timer is provided to the UE, the UE may use only the existing cell reselection timer without additionally applying the MBSR selection decision-related timer to the existing cell reselection timer.

In order to infer/determine that the cell targeted for cell reselection is an MBSR cell (or IAB cell), the UE may use various information such as existing system information provided by MBSR (e.g., information indicating IAB, etc.), the information described in [1] above, and the information described in [2] above. This variety of information can be used in a combined form.

If MBSR provides one or more of the information described in [1] above (Even if the information is not proposed in this specification, it can be interpreted to include both cases where an existing cell reselection timer is provided and cases where an existing cell reselection timer and speed-based scale factor are provided) and the information described in [2] above, operation 3) above may be performed.

5. When the UE decides to select a cell for MBSR, the UE may determine whether it should perform a mobility registration update to the network accordingly. If mobility registration update is required, the UE may establish an RRC connection through MBSR.

6. The UE may perform registration procedures with AMF.

In addition to the information considered to determine the selection of the MBSR above, the UE (for [1] to [3] above), the AMF (for [4] above) and the gNB-CU (for [5] above) may consider a variety of information to determine the selection of the MBSR for the UE or the association of the UE to the MBSR.

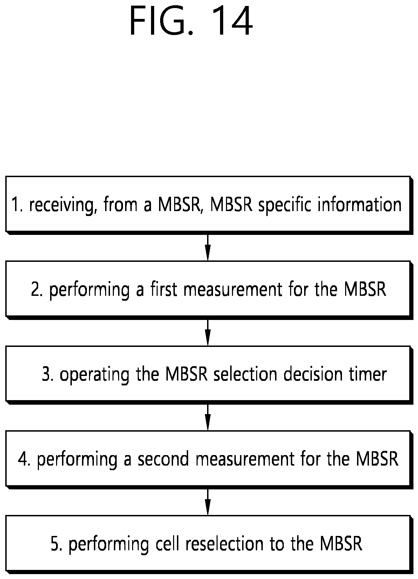

**FIG. 14** **shows the procedure of the UE according to disclosure of the present specification.**
1. The UE may receive, from a MBSR (Mobile Base Station Relay), MBSR specific information.
   The MBSR specific information may include a MBSR selection decision timer.
2. The UE may perform a first measurement for the MBSR.
3. The UE may operate the MBSR selection decision timer, based on a result of the first measurement meeting cell reselection criteria.
4. The UE may perform a second measurement for the MBSR, based on the MBSR selection decision timer expiring.
5. The UE perform cell reselection to the MBSR, based on a result of the second measurement meeting the cell reselection criteria.

The UE may receive, from the MBSR, mobility information of the MBSR.

The cell reselection may be performed based on the mobility information of the MBSR.

The cell reselection may be performed based on mobility information of the UE.

The MBSR specific information may include PLMN (Public Land Mobile Network) ID.

The UE may establish RRC (Radio Resource Control) connection via the MBSR.

The UE may perform registration procedure with an AMF (Access and Mobility management Function).

The MBSR specific information may include at least one of i) information indicating that the MBSR is a mobile base station and ii) identifying information for the MBSR.

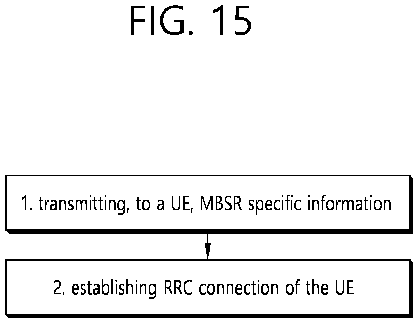

**FIG. 15** **shows the procedure of the MBSR according to disclosure of the present specification.**
1. The MBSR may transmitting, to a UE (User Equipment), MBSR specific information.
   The MBSR specific information may include a MBSR selection decision timer.
2. The MBSR may establish(setup) RRC (Radio Resource Control) connection of the UE, based on the UE performing cell reselection to the MBSR.

The MBSR may transmit, to the UE, mobility information of the MBSR.

The MBSR specific information may include PLMN (Public Land Mobile Network) ID.

Hereinafter, an apparatus for performing communication according to some embodiments of the present specification will be described.

For example, an apparatus may include a processor, a transceiver, and a memory.

For example, a processor may be configured to be operably coupled with a memory and a processor.

The processor may perform: receiving, from a mobile base station relay (MBSR), MBSR-specific information, which includes a MBSR selection determination timer; performing a first measurement on the MBSR; driving the MBSR selection determination timer on the basis that the result of the first measurement satisfies a cell reselection criteria; performing a second measurement on the MBSR on the basis that the MBSR selection determination timer has expired; and performing cell reselection on the MBSR on the basis that the result of the second measurement satisfies the cell reselection criteria.

Hereinafter, a processor for providing communication according to some embodiments of the present specification will be described.

The processor is configured to: receiving, from a mobile base station relay (MBSR), MBSR-specific information, which includes a MBSR selection determination timer; performing a first measurement on the MBSR; driving the MBSR selection determination timer on the basis that the result of the first measurement satisfies a cell reselection criteria; performing a second measurement on the MBSR on the basis that the MBSR selection determination timer has expired; and performing cell reselection on the MBSR on the basis that the result of the second measurement satisfies the cell reselection criteria.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: receiving, from a mobile base station relay (MBSR), MBSR-specific information, which includes a MBSR selection determination timer; performing a first measurement on the MBSR; driving the MBSR selection determination timer on the basis that the result of the first measurement satisfies a cell reselection criteria; performing a second measurement on the MBSR on the basis that the MBSR selection determination timer has expired; and performing cell reselection on the MBSR on the basis that the result of the second measurement satisfies the cell reselection criteria.

The present specification may have various effects.

For example, a UE that detects an MBSR can perform cell reselection taking into account the characteristics of the MBSR to reduce unnecessary cell reselection and registration updates.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a UE (User Equipment), comprising:
receiving, from a MBSR (Mobile Base Station Relay), MBSR specific information;
wherein the MBSR specific information includes a MBSR selection decision timer,
performing a first measurement for the MBSR;
operating the MBSR selection decision timer, based on a result of the first measurement meeting cell reselection criteria;
performing a second measurement for the MBSR, based on the MBSR selection decision timer expiring;
performing cell reselection to the MBSR, based on a result of the second measurement meeting the cell reselection criteria.

2. The method of claim 1, further comprising:
receiving, from the MBSR, mobility information of the MBSR,
wherein the cell reselection is performed based on the mobility information of the MBSR.

3. The method of claim 2,
wherein the cell reselection is performed based on mobility information of the UE.

4. The method of claim 1,
wherein the MBSR specific information includes PLMN (Public Land Mobile Network) ID.

5. The method of claim 1, further comprising:
establishing RRC (Radio Resource Control) connection via the MBSR;
performing registration procedure with an AMF (Access and Mobility management Function).

6. The method of claim 1,
wherein the MBSR specific information includes at least one of i) information indicating that the MBSR is a mobile base station and ii) identifying information for the MBSR.

7. A UE (User Equipment), to perform communication, comprising:
a transceiver; and
a processor,
wherein the processor performs operation comprising:
receiving, from a MBSR (Mobile Base Station Relay), MBSR specific information;
wherein the MBSR specific information includes a MBSR selection decision timer,
performing a first measurement for the MBSR;
operating the MBSR selection decision timer, based on a result of the first measurement meeting cell reselection criteria;
performing a second measurement for the MBSR, based on the MBSR selection decision timer expiring;
performing cell reselection to the MBSR, based on a result of the second measurement meeting the cell reselection criteria.

8. The UE of claim 7, wherein the operation further comprises:
receiving, from the MBSR, mobility information of the MBSR,
wherein the cell reselection is performed based on the mobility information of the MBSR.

9. The UE of claim 7,
wherein the cell reselection is performed based on mobility information of the UE.

10. The UE of claim 7,
wherein the MBSR specific information includes PLMN (Public Land Mobile Network) ID.

11. The UE of claim 7, wherein the operation further comprises:
establishing RRC (Radio Resource Control) connection via the MBSR;
performing registration procedure with an AMF (Access and Mobility management Function).

12. The UE of claim 7,
wherein the MBSR specific information includes at least one of i) information indicating that the MBSR is a mobile base station and ii) identifying information for the MBSR.

13. A method for performing communication, performed by a MBSR (Mobile Base Station Relay), comprising:
transmitting, to a UE (User Equipment), MBSR specific information;
wherein the MBSR specific information includes a MBSR selection decision timer,
establishing RRC (Radio Resource Control) connection of the UE, based on the UE performing cell reselection to the MBSR.

14. The method of claim 13, further comprising:
transmitting, to the UE, mobility information of the MBSR.

15. The method of claim 13,
wherein the MBSR specific information includes PLMN (Public Land Mobile Network) ID.

16. The method of claim 13,
wherein the MBSR specific information includes at least one of i) information indicating that the MBSR is a mobile base station and ii) identifying information for the MBSR.

17. A MBSR (Mobile Base Station Relay), to perform communication, comprising:
a transceiver; and
a processor,
wherein the processor performs operation comprising:
transmitting, to a UE (User Equipment), MBSR specific information;
wherein the MBSR specific information includes a MBSR selection decision timer,
establishing RRC (Radio Resource Control) connection of the UE, based on the UE performing cell reselection to the MBSR.

18. An apparatus in mobile communication, comprising:
at least one processor; and
at least one memory storing instructions and operably electrically connectable with the at least one processor, based on the instructions being operated by the at least one processor, performed operation comprising:
receiving, from a MBSR (Mobile Base Station Relay), MBSR specific information;
wherein the MBSR specific information includes a MBSR selection decision timer,
performing a first measurement for the MBSR;
operating the MBSR selection decision timer, based on a result of the first measurement meeting cell reselection criteria;
performing a second measurement for the MBSR, based on the MBSR selection decision timer expiring;
performing cell reselection to the MBSR, based on a result of the second measurement meeting the cell reselection criteria.

19. A non-volatile computer readable storage medium having recorded instructions,
wherein the instructions, based on being executed by one or more processors, cause the one or more processors to:
receiving, from a MBSR (Mobile Base Station Relay), MBSR specific information;
wherein the MBSR specific information includes a MBSR selection decision timer,
performing a first measurement for the MBSR;
operating the MBSR selection decision timer, based on a result of the first measurement meeting cell reselection criteria;
performing a second measurement for the MBSR, based on the MBSR selection decision timer expiring;
performing cell reselection to the MBSR, based on a result of the second measurement meeting the cell reselection criteria.
